# EUROPÄISCHE PATENTSCHRIFT

(11) **EP 3 106 843 B1**
(45) Veröffentlichungstag und Bekanntmachung des Hinweises auf die Patenterteilung: **11.09.2019**
(21) Anmeldenummer: 16169581.2
(22) Anmeldetag: 13.05.2016
(51) Int. Cl.: G01F 5/00, G01F 15/12, G01F 15/18, G01F 1/684, G01F 1/69, F04D 27/00

(54) **DÜSENVORRICHTUNG MIT SENSOR IN EINEM BYPASS**
NOZZLE DEVICE WITH SENSOR IN A BYPASS
DISPOSITIF DE BUSE COMPRENANT UN CAPTEUR DANS UNE DERIVATION

(30) Priorität: 17.06.2015 DE 102015109686
(43) Veröffentlichungstag der Anmeldung: 21.12.2016
(73) Patentinhaber: ebm-papst Landshut GmbH, 84030 Landshut (DE)
(72) Erfinder: Dr. Dannemann, Jan, 84034 Landshut (DE); Dr. Keber, Roland, 84109 Wörth (DE); Sachsenhauser, Andreas, 84034 Landshut (DE); Schwalme, Jürgen, 84048 Mainburg (DE)
(74) Vertreter: Staeger & Sperling Partnerschaftsgesellschaft mbB

(56) Entgegenhaltungen:
- DE-A1- 2 914 275
- DE-A1- 3 905 746
- DE-B1- 2 915 550
- GB-A- 2 065 898
- US-A1- 2005 183 500
- US-A1- 2006 266 110
- US-A1- 2013 019 675

## Beschreibung

Die Erfindung betrifft eine Düsenvorrichtung, welche ausgeführt ist zur Luftförderung bei einem Gebläse, das einen Bypass aufweist, in dem ein Sensor zur Messung von Parametern der geförderten Luft angeordnet ist und auf spezielle Weise von einer Bypassströmung umströmt wird.

Die Verwendung von Sensoren an Düsenvorrichtungen und Gebläsen ist aus dem Stand der Technik bekannt, beispielsweise um die geförderte Luftmenge zu messen und das Messergebnis als Regelgröße für das Gebläse zu verwenden. Besonders im Bereich von vormischenden Gas-Luft-Mischgebläsen ist die Luftmasse eine wichtige Regelgröße. Die Sensoren weisen hierfür üblicherweise Leiterplatten mit temperatursensiblen elektronischen Bauteilen und Widerständen auf. Stand der Technik aus dem vorliegenden technischen Bereich ist aus den Offenbarungen der Dokumente DE 29 14 275 A1,
US 2005/0183500 A1, GB 2 065 898 A und DE 39 05 746 A1 bekannt.

Insbesondere die gegenseitige Wärmeeinwirkung im Bereich der für die Messung der Parameter verwendeten Widerstände verfälscht die Genauigkeit des Messergebnisses sowie die Reaktionszeit des Sensors auf Veränderungen bei den Parametern.

Der Erfindung liegt deshalb die Aufgabe zugrunde, eine Düsenvorrichtung mit einem Sensor zur Messung eines Parameters der geförderten Luft bereit zu stellen, bei der die von dem Sensor gelieferten Daten beziehungsweise Signale genauer sind und, bei der die Reaktionszeit des Sensors verkürzt ist.

Diese Aufgabe wird durch die Merkmalskombination gemäß Patentanspruch 1 gelöst.

Die erfindungsgemäße Düsenvorrichtung zur Luftförderung bei einem Gebläse umfasst hierzu ein Düsengehäuse zum Leiten einer Hauptströmung sowie einen außenseitig an dem Düsengehäuse vorgesehenen Bypass, der über eine Gehäusewandöffnung mit einem Inneren des Düsengehäuses und der Hauptströmung strömungsverbunden ist, so dass der Bypass von einer Bypassströmung durchströmbar ist. In dem Bypass ist ein Sensor zur Messung von Parametern der geförderten Luft angeordnet, der mehrere einzelne und voneinander beabstandete Stege aufweist, an denen jeweils Messmittel des Sensors angeordnet sind. Ferner ist eine in dem Bypass zu dem Sensor stromaufwärts angeordnete Leiteinrichtung zum Leiten der Bypassströmung auf die jeweiligen Stege des Sensors und insbesondere auf dessen Messmittel vorgesehen, die mehrere zu den Stegen des Sensors ausgerichtete Düsenöffnungen aufweist, so dass die Bypassströmung durch die Düsenöffnungen direkt auf die auf den Stegen angeordneten Messmittel geleitet wird.

In einer bevorzugten Ausführungsvariante ist der Sensor ein Massenstromsensor mit Messwiderständen, beispielsweise Pt100- und Pt-1000-Elementen, als Messmittel. Die Massenstrommessung kann dabei über das dem Fachmann bekannte Anemometer-Prinzip erfolgen.

Durch die Ausrichtung der Bypassströmung direkt auf die auf den beabstandeten Stegen angeordneten Messmittel des Sensors wird die bessere Genauigkeit und verkürzte Reaktionszeit des Sensors erreicht. Die Anordnung der Messmittel auf beabstandeten Stegen begünstigt dies dadurch, dass die Messmittel keiner gegenseitigen oder anderen Wärmeeinwirkung von außen ausgesetzt sind, sondern die Bypassströmung um das jeweilige Messmittel und die jeweiligen Stege herumgeführt werden kann.

Zudem erstrecken sich die Stege vorzugsweise in eine Richtung weg von weiteren elektronischen Bauteilen des Sensors, die üblicherweise auf einer Leiterplatte angeordnet sind. Dabei weisen die Stege ein freies Ende auf, in dessen Bereich die Messmittel befestigt werden. Das freie Ende ist vorteilhaft, da es durch die Bypassströmung vollständig umströmt werden kann. Zudem kann um das freie Ende der Stege ein Freiraum vorgesehen werden, der eine weitere Entkopplung zu elektronischen Bauteilen des Sensors ermöglicht.

In einer günstigen Ausführungsform der Erfindung ist ferner vorgesehen, dass die die Leiteinrichtung und die Stege des Sensors zueinander in Strömungsrichtung in einem Abstand von 3 - 10mm, weiter bevorzugt 4 - 8mm, angeordnet sind. Die Bypassströmung kann somit unmittelbar ohne Turbulenzen oder eine Beeinflussung von außen von der Leiteinrichtung auf die Messmittel treffen und konstant gelichmäßig an diesen vorbeiströmen. Dabei sind Änderungen bei der geförderten Luftmasse unmittelbar und ohne Verzögerung sensierbar.

Als vorteilhafte Ausführung der Düsenvorrichtung erstrecken sich die Stege parallel in einem Abstand von 5 - 10mm ausgehend von der Leiterplatte und weisen eine Länge von 20 - 80mm auf. Dadurch wird eine ausreichend sichere Abgrenzung der Messmittel zu benachbarten Bauteile sichergestellt und jede Art von wechselseitiger Wärmebeeinflussung ausgeschlossen.

Zur Verbesserung der Messgenauigkeit ist in einer Weiterbildung der Erfindung vorgesehen, dass in dem Bypass dem Sensor in Strömungsrichtung vorgeschaltet ein Staubabscheider angeordnet ist, der die Bypassströmung von Feinstaub befreit. Vorzugsweise ist der Staubabscheider als Prall-Feinstaubascheider ausgebildet und weist mehrere Prallplatten und mehrere Leitplatten auf, die in einer Strömungsrichtung abwechselnd und beabstandet angeordnet sind, wobei die Leitplatten vorzugsweise mehrere Düsenlöcher und die Prallplatten einen oder mehrere Strömungsdurchgänge mit gegenüber den Düsenlöchern vergrößertem Gesamt-Strömungsquerschnitt aufweisen. Dadurch bildet die Bypassströmung beim Strömen durch die Düsenlöcher jeweils eine Strahlströmung und prallt gegen eine Prallfläche der jeweils nachfolgenden Prallplatte. An der jeweiligen Prallplatte strömt die Bypassströmung über den Strömungsdurchgang lediglich bei geringerem Druck vorbei, bevor sie wieder durch die Düsenlöcher der jeweils nachfolgenden Leitplate beschleunigt wird. Die Bypassströmung wechselt somit zwischen hoher Strömungsgeschwindigkeit zur Erzeugung eines harten Anpralls gegen die Prallplatten, um diese anschließend bei geringerer Strömungsgeschwindigkeit zu passieren. Dieser Vorgang wiederholt bei jedem Paar aus Leitplatte und Prallplate.

Alternativ ist in einer kompakter aufbauenden Ausführungsvariante vorgesehen, dass der Feinstaub-Prallabscheider mindestens eine Prallplatte und mindestens eine Leitplatte aufweist, die senkrecht zur Strömungsrichtung aufeinander liegend angeordnet sind, wobei die mindestens eine Leitplatte mindestens ein Düsenloch und mindestens einen Strömungsdurchgang mit gegenüber dem mindestens einen Düsenloch vergrößertem Strömungsquerschnitt aufweist, so dass die Bypassströmung beim Strömen durch das mindestens eine Düsenloch jeweils eine Strahlströmung bildet und gegen eine Prallfläche der in Strömungsrichtung nachfolgenden Prallplatte prallt.

In einem ebenfalls die kompakte Bauweise begünstigenden Ausführungsbeispiel der Erfindung die in Strömungsrichtung gesehen letztangeordnete Leitplatte oder Prallplatte als Leiteinrichtung verwendet. Dabei werden in der Leiteinrichtung eine der Anzahl der Stege des Sensors entsprechende Anzahl von Düsenöffnungen vorgesehen, über welche die Bypassströmung auf die Messmittel geleitet wird. Die Größe der Düsenöffnungen bestimmt die Strömungsgeschwindigkeit. Dabei ist günstig, den Gesamtquerschnitt der Düsenöffnungen größer auszubilden als denjenigen der vorherigen Düsenlöcher, um eine Strahlströmung durch die Düsenöffnungen der Leiteinrichtung und mithin ein Anprallen und Abscheiden von Feinstaub auf den Messmitteln zu vermeiden.

Zur Erhöhung der Staub-Abscheidewirkung ist bei der Düsenvorrichtung in einer vorteilhaften Variante berücksichtigt, dass die Prallfläche der Prallplatten und/oder die Anprallfläche des Sensorgehäuses eine Rauheit gemäß Oberflächenstruktur nach Richtlinie VDI 3400 aufweist bzw. aufweisen. Der hohe Rauheitswert begünstigt die Anhaftwirkung für Feinstaub. Zudem kann pro Fläche eine größere Menge Feinstaub gesammelt werden.

Ebenfalls eine kompakte Bauweise fördernd ist eine Ausbildung der Düsenvorrichtung, bei der der Staubabscheider ein Gehäuse aufweist, das zumindest abschnittsweise den Bypass bildet. Es ist somit nicht nötig, einen externen Staubabscheider in den Bypass einzubringen, vielmehr wird der Staubascheider bzw. sein Gehäuse selbst genutzt, zumindest bestimmte Seitenflächen des Bypasses zu bilden. Eine der Seitenwände des Bypasses wird zudem vorzugsweise durch die Außenwand des Düsengehäuses bereit gestellt.

In einer weiteren Ausführungsform der Erfindung ist vorgesehen, dass die Stege des Sensors gegenüber einer Ebene, die parallel zu einer Querschnittsfläche der Düsenöffnungen der Leiteinrichtung verläuft, schräg in einem Winkel von 10 - 30°, weiter bevorzugt 10 - 20° verlaufend angeordnet sind. Die Schrägstellung gegenüber der Bypassströmung führt zu einer stabilen Anströmung und mithin einem stabilen Signal des Sensors.

In einer Weiterbildung der Düsenvorrichtung ist vorgesehen, dass in ihren Lufteintrittsbereich ein Vorababscheider eingesetzt ist, der eine Düsenquerschnittsfläche lokal begrenzt verringert und derart ausgebildet ist, Fremdpartikel mit einer Größe von >400µm und Flusen aus der geförderten Luft zu filtern. Dabei wird zwischen dem Vorabscheider und der Innenwandfläche des Düsengehäuses ein Ringspalt vorgesehen, der mit der mindestens einen Strömungseintrittsöffnung in den Staubabscheider strömungsverbunden ist. Die Größe des Ringspalts ist auf maximal 400µm dimensioniert, so dass keine Partikel oder Flusen mit einer Größe von >400µm passieren können. Die Bypassströmung durch den Staubabscheider ist somit frei von grobem Staub, Flusen und vergleichbaren Fremdkörpern.

Der Ringspalt bildet zwischen der Innenwandfläche des Düsengehäuses und dem Vorabscheider einen Strömungseinlass, der innerhalb der Düsenvorrichtung stromabwärts gegenüber der Strömungseintrittsöffnung positioniert ist. Dadurch wird die in den Ringspalt eintretende Strömung zunächst entgegen der Hauptströmung zurück und radial nach außen über die Strömungseintrittsöffnung in den Staubabscheider geführt.

Die Erfindung umfasst auch das Verfahren zum Messen eines durch die oben beschriebene Düsenvorrichtung durchströmenden Luftmassenstromes, bei dem in dem Bypass über die zu dem Sensor stromaufwärts angeordnete Leiteinrichtung die Bypassströmung auf die jeweiligen beabstandeten Stege des Sensors geleitet wird, so dass die Bypassströmung direkt auf die auf den Stegen angeordneten Messmittel und um diese herum geleitet wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Ansicht einer Düsenvorrichtung;
- Fig. 2: eine perspektivische Ansicht von Teilen der Düsenvorrichtung aus Figur 1, teilweise aufgeschnitten,
- Fig. 3: eine seitliche Schnittansicht der Düsenvorrichtung aus Figur 2,
- Fig. 4: eine seitliche Schnittansicht einer weiteren Ausführungsvariante der Düsenvorrichtung.

Gleiche Bezugszeichen benennen gleiche Teile in allen Ausführungsbeispielen.

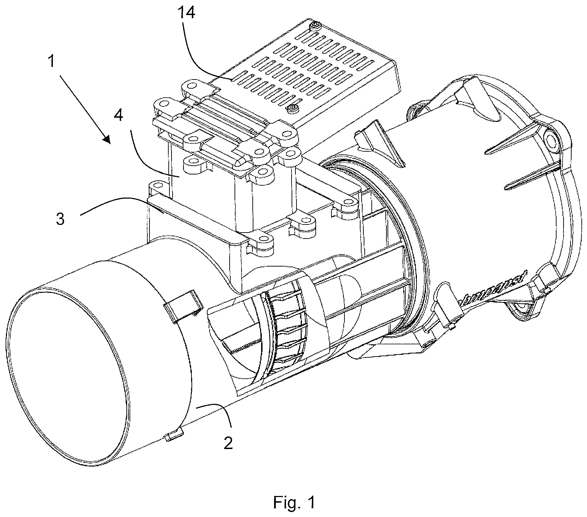

In Figur 1 ist in perspektivischer Ansicht eine Düsenvorrichtung 1 gezeigt, die einem Gebläse vor- oder nachgeschaltet zur Luftförderung eingesetzt wird. Die Düsenvorrichtung 1 weist ein Düsengehäuse 2 mit einer Außenwandfläche 3 auf, an der ein als Feinstaub-Prallabscheider zum Abscheiden von Staubpartikeln mit einer Partikelgröße von kleiner als 10µm ausgebildeter Staubabscheider 4 montiert ist. Auf dem Staubabscheider 4 ist ein Sensorgehäuse 14 mit darin aufgenommenen Sensor 8 befestigt. Der Staubascheider 4 sowie der Sensor 8 sind mit einer im Inneren der Düsenvorrichtung 1 verlaufenden Hauptströmung strömungsverbunden und bilden einen Bypass, so dass eine Bypassströmung durch den Staubabscheider 4 über den Sensor 8 und zurück zur Hauptströmung gewährleistet ist.

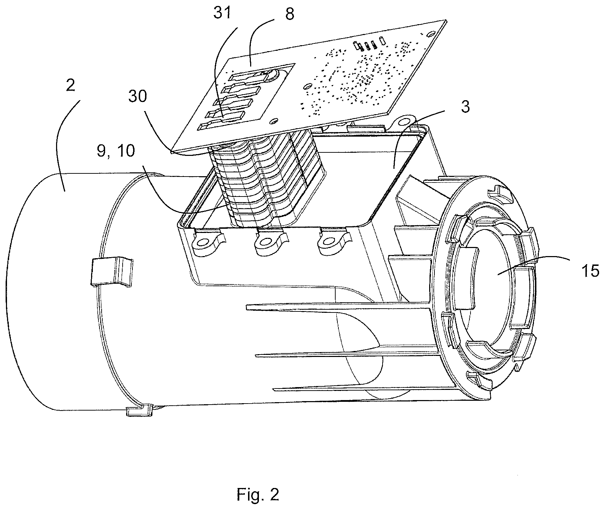

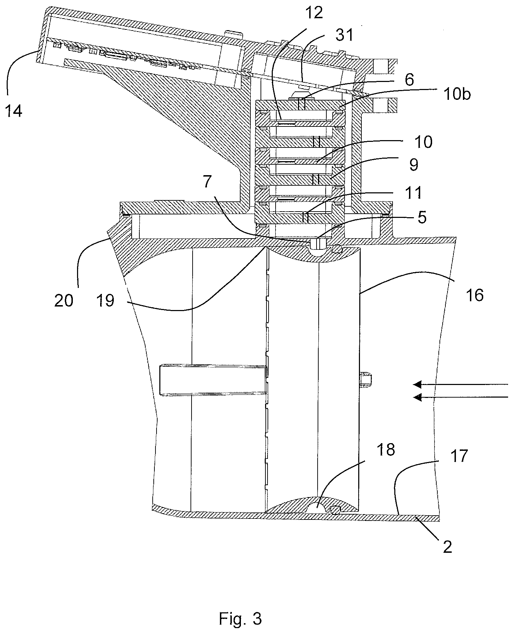

In Figur 2 ist die Düsenvorrichtung aus Figur 1 gezeigt, wobei das Gehäuse des Staubabscheiders 4 sowie das Sensorgehäuse 14 entfernt sind. Der Staubabscheider 4 ist teilweise einteilig an der Außenwandfläche 3 des Düsengehäuses 2 ausgebildet und weist zur Staubabscheidung mehrere übereinander sowie in Reihe angeordnete Leitplatten 9 und Prallplatten 10 auf, wobei die in Strömungsrichtung letzte Leitplatte 10b (siehe auch Fig. 3) als Leiteinrichtung 30 dient. Der Sensor 8 ist auf dem Stapel aus Leitplatten 9 und Prallplatten 10 in Strömungsrichtung direkt nachgeschaltet angeordnet, so dass die Bypassströmung unmittelbar auf an den Enden der Stege 31 des Sensors 8 vorgesehene Messmittel trifft.

Der gezeigte Sensor 8 umfasst vier parallel beabstandet verlaufende Stege 31 mit an den freien Enden jeweils angeordneten Messmitteln (nicht dargestellt). Die Stege 31 erstrecken sich von einer Leiterplatte des Sensors 8 in einen freien Ausschnitt und bieten der Bypassströmung ausreichend freien Raum, die Stege 31 und Messmittel seitlich und an den freien Enden zu umströmen. Die Messmittel sind zueinander und von den angedeuteten elektronischen Bauteilen auf der Leiterplatte thermisch entkoppelt. Als Messmittel werden redundant auf jeweils zwei Stegen Pt100- und Pt1000-Messwiderstände eingesetzt.

In Figur 3 ist der Aufbau der Düsenvorrichtung 1 aus Figur 1 in einer seitlichen Schnittansicht dargestellt. Im Inneren der Düsenvorrichtung 1 ist ein Vorabscheider 16 eingesetzt. An dem Düsengehäuse 2 ist eine Gehäusewandöffnung 7 ausgebildet, an die sich als Strömungseintrittsöffnung 5 des Staubabscheiders 4 für den Eintritt der Bypassströmung anschließt.

Zwischen dem Vorabscheider 16 und der Innenwandfläche 17 des Düsengehäuses 2 ist ein Ringspalt 18 als Strömungseinlass 19 vorgesehen, der in der Düsenvorrichtung 1 stromabwärts gegenüber der Strömungseintrittsöffnung 5 positioniert ist. Der Ringspalt 18 weist eine Größe von maximal 400µm auf, um größere Partikel wie Flusen und dergleichen zu filtern.

Die abwechselnd in Reihe angeordneten Prallplatten 10 und Leitplatten 9 bieten einen Strömungsdurchgang für die Bypassströmung bis hin zum Sensor 8. Dabei weisen die Leitplatten 9 jeweils mehrere Düsenlöcher 11 und die Prallplatten 10 jeweils einen Strömungsdurchgang 12 mit gegenüber dem Gesamtquerschnitt der Düsenlöcher 11 vergrößertem Strömungsquerschnitt auf. Dies führt dazu, dass die Bypassströmung beim Strömen durch die Düsenlöcher 11 jeweils eine beschleunigte Strahlströmung bildet und gegen die jeweils nachfolgende Prallplatte 10 mit hoher Geschwindigkeit prallt. An der Prallplatte 10 strömt die Bypassströmung anschließend über den vergleichsweise größeren Strömungsdurchgang langsamer als durch die Düsenlöcher 11 vorbei. Dieser Vorgang wiederholt sich von jeder Leitplatte 9 zu der jeweils nachfolgenden Prallplatte 10 bis zur Leiteinrichtung 30 und dem sich anschließenden Sensor 8. Der Strömungsdurchgang 12 ist jeweils als Durchgangsloch ausgeführt und zu den Düsenlöchern 11 seitlich beanstandet positioniert. Die in der in der Zeichnung dargestellte oberste Prallplatte 10b ist gleichzeitig als Leiteinrichtung 30 mit vier Düsenöffnungen 6 ausgeführt, die zu den Stegen 31 des Sensors 8 ausgerichtet sind. Die Düsenöffnungen 6 weisen einen gegenüber den vorhergehenden Düsenlöchern 11 größeren Gesamtquerschnitt auf, um eine geringere Düsen- und Anprallwirkung der Bypassströmung und mithin eine beschleunigte Strahlströmung gegen die in Strömungsrichtung gesehen nachfolgenden Messmittel auf den Stegen 31 des Sensors 8 zu beweiken. Dadurch wird ausgeschlossen, dass es zu Anhaftungen von Feinstaub an den auf den Stegen 31 des Sensors 8 angeordneten Messmitteln kommt.

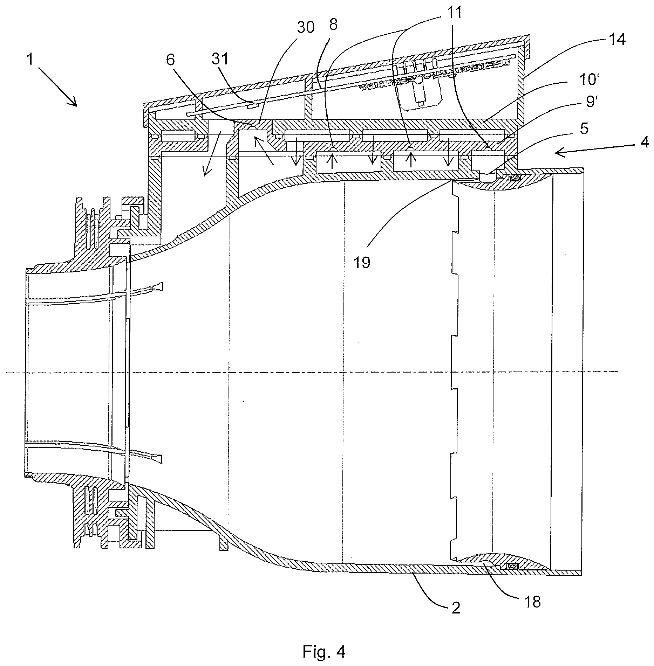

Figur 4 zeigt eine weitere alternative Ausführungsvariante der Erfindung, die im Wesentlichen mit der Ausführung aus Figur 3 übereinstimmt und im Folgenden nur Unterschiede beschrieben sind. Die übrigen Merkmale gelten als identisch zu den oben Beschriebenen gelöst. In dem Ausführungsbeispiel sind die Leitplatten und die Prallplatten des Staubabscheiders 4 senkrecht zur axialen Richtung und senkrecht zur Haupt-Strömungsrichtung angeordnet, so dass die Strömung durch den Staubabscheider 4 nicht wie bei einer Ausführung gemäß Figur 4 parallel zur Strömung, sondern senkrecht hierzu geleitet wird. Die Prallplatte 9' und die Leitplatte 10' sind jeweils einteilig ausgebildet und erstrecken sich eben parallel zur Hauptachse. Die Leitplatte 10' ist unmittelbar auf die Prallplatte 9' aufgelegt. In der Leitplatte 9' sind mehrere Düsenlöcher 11 vorgesehen, durch die die Bypassströmung in durch die Leitplatte 10' und Prallplatte 9' gebildete Kammern gelangt und an die Leitplatte 10' prallt. Zwischen der Prallplatte 9' und dem Gehäuse 2 sind in Axialrichtung nebeneinander weitere Kammern ausgebildet, in welche die Bypassströmung durch jeweiligen Strömungsdurchgänge (nicht gezeigt) in der Prallplatte 9' gelangt. Dieser Vorgang wiederholt sich von Kammer zu Kammer, wobei die Bypassströmung jeweils durch die Düsenlöcher 11 mit gegenüber den Strömungsdurchgängen reduzierten Durchmessern beschleunigt gegen die Leitplatte 10' prallt. Anschließend verlangsamt sich die Bypassströmung in der nachfolgenden Kammer. Das Sensorgehäuse 14 nimmt den Sensor 8 mit seinen Stegen 31 auf und ist einteilig mit der Leitplatte 10' ausgebildet. Der Weg der Bypassströmung ist zum leichteren Verständnis durch Pfeile dargestellt. Die Ausführung gemäß Figur 4 zeigt, dass die Bypassströmung und Anordnung von Prallplatten und Leitplatten zueinander nicht notwendigerweise senkrecht zur Axialrichtung verläuft, sondern auch in einer Weise realisiert sein kann, dass der Gesamtaufbau reduziert ist.

In allen Ausführungen sind der Sensor 8 und dessen Stege 31 gegenüber der parallel zu dem Querschnitt der Düsenöffnungen (6) der Leiteinrichtung 30 gebildeten Ebene schräg in einem Winkel von 15° verlaufend angeordnet. Dabei werden die Messmittel des Sensors 8 von einer stabilen Strömung umströmt und liefern ein stabiles Signal. Über Kanäle 20 wird die Bypassströmung zurück zur Hauptströmung geführt.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise können die Leitplatten und Prallplatten auch in axialer Richtung zu einem Stapel gebaut werden, um die Aufbauhöhe zu verringern.

## Patentansprüche

1. Düsenvorrichtung ausgeführt zur Luftförderung bei einem Gebläse, umfassend:
- ein Düsengehäuse (2) zum Leiten einer Hauptströmung,
- einen außenseitig an dem Düsengehäuse vorgesehenen Bypass, der über eine Gehäusewandöffnung (7) mit einem Inneren des Düsengehäuses (2) und der Hauptströmung strömungsverbunden ist, so dass der Bypass von einer Bypassströmung durchströmbar ist,
- einen in dem Bypass angeordneten Sensor (8) zur Messung von Parametern der geförderten Luft, der mehrere einzelne und voneinander beabstandete Stege (31) aufweist, an denen jeweils Messmittel des Sensors (8) angeordnet sind,
**gekennzeichnet durch**
- eine in dem Bypass zu dem Sensor (8) stromaufwärts angeordnete Leiteinrichtung (30) zum Leiten der Bypassströmung auf die jeweiligen Stege (31) des Sensors, wobei die Leiteinrichtung mehrere Düsenöffnungen (6) aufweist, die jeweils zu den Stegen (31) des Sensors (8) ausgerichtet sind, so dass die Bypassströmung durch die Düsenöffnungen (6) direkt auf die auf den Stegen (31) angeordneten Messmittel geleitet wird.

2. Düsenvorrichtung nach Anspruch 1, **dadurch gekennzeichnet, dass** der Sensor (8) ein Massenstromsensor mit Messwiderständen als Messmittel ist.

3. Düsenvorrichtung nach Anspruch 1 oder 2, **dadurch gekennzeichnet, dass** die Leiteinrichtung (30) und die Stege (31) des Sensors (8) zueinander in Strömungsrichtung in einem Abstand von 3 - 10mm angeordnet sind.

4. Düsenvorrichtung nach zumindest einem der vorigen Ansprüche, **dadurch gekennzeichnet, dass** die Stege (31) mit einem freien Ende ausgebildet sind und die Messmittel jeweils im Bereich des freien Endes der Stege (31) angeordnet sind.

5. Düsenvorrichtung nach zumindest einem der vorigen Ansprüche, **dadurch gekennzeichnet, dass** sich die Stege (31) parallel in einem Abstand von 5 - 10mm ausgehend von einer Leiterplatte erstrecken und eine Länge von 20 - 80mm aufweisen.

6. Düsenvorrichtung nach zumindest einem der vorigen Ansprüche, **dadurch gekennzeichnet, dass** in dem Bypass dem Sensor (8) in Strömungsrichtung vorgeschaltet ein Staubabscheider (4) angeordnet ist.

7. Düsenvorrichtung nach Anspruch 6, **dadurch gekennzeichnet, dass** der Staubabscheider (4) mehrere Prallplatten (10) und mehrere Leitplatten (9) aufweist, die in einer Strömungsrichtung abwechselnd und beabstandet angeordnet sind, wobei die Leitplatten (9) mindestens ein Düsenloch (11) und die Prallplatten (10) mindestens einen Strömungsdurchgang mit gegenüber dem mindestens einen Düsenloch (11) vergrößertem Strömungsquerschnitt aufweisen, so dass die Bypassströmung beim Strömen durch das mindestens eine Düsenloch (11) jeweils eine Strahlströmung bildet und gegen eine Prallfläche der jeweils nachfolgenden Prallplatte (10) prallt und an der jeweiligen Prallplatte (10) über den mindestens einen Strömungsdurchgang vorbeiströmt.

8. Düsenvorrichtung nach Anspruch 7, **dadurch gekennzeichnet, dass** die in Strömungsrichtung gesehen letztangeordnete Leitplatte oder Prallplatte (10b) die Leiteinrichtung (30) bildet.

9. Düsenvorrichtung nach zumindest einem der vorigen Ansprüche 6 bis 8, **dadurch gekennzeichnet, dass** der der Staubabscheider (4) als Feinstaub-Prallabscheider ausgebildet mindestens eine Prallplatte (10') und mindestens eine Leitplatte (9') aufweist, die senkrecht zur Strömungsrichtung aufeinander liegend angeordnet sind, wobei die mindestens eine Leitplatte (9') mindestens ein Düsenloch (11) und mindestens einen Strömungsdurchgang (12) mit gegenüber dem mindestens einen Düsenloch (11) vergrößertem Strömungsquerschnitt aufweist, so dass die Bypassströmung beim Strömen durch das mindestens eine Düsenloch (11) jeweils eine Strahlströmung bildet und gegen eine Prallfläche der in Strömungsrichtung nachfolgenden Prallplatte (10') prallt.

10. Düsenvorrichtung nach Anspruch 6, **dadurch gekennzeichnet, dass** der Staubabscheider (4) ein Gehäuse aufweist, das zumindest abschnittsweise den Bypass bildet.

11. Düsenvorrichtung nach zumindest einem der vorigen Ansprüche, **dadurch gekennzeichnet, dass** die Stege (31) des Sensors (8) gegenüber einer Ebene, die parallel zu einer Querschnittsfläche der Düsenöffnungen (6) der Leiteinrichtung (30) verläuft, schräg in einem Winkel von 10 - 30° verlaufend angeordnet sind.

12. Düsenvorrichtung nach einem der vorigen Ansprüche 7 bis 11, **dadurch gekennzeichnet, dass** ein Gesamtquerschnitt der Düsenöffnungen (6) größer ist als derjenige der des mindestens einen Düsenloches (11) oder der mehreren Düsenlöcher (11).

13. Verfahren zum Messen eines die Düsenvorrichtung (1) nach einem der vorigen Ansprüche durchströmenden Luftmassenstromes, wobei in dem Bypass über die zu dem Sensor (8) stromaufwärts angeordnete Leiteinrichtung (30) die Bypassströmung auf die jeweiligen beabstandeten Stege des Sensors (8) geleitet wird, so dass die Bypassströmung direkt auf die auf den Stegen (31) angeordneten Messmittel und um diese herum geleitet wird.

## Claims

1. A nozzle device, configured for conveying air of a fan, comprising:
- a nozzle housing (2) for guiding a main flow,
- a bypass provided on the outside of the nozzle housing, which is fluidly connected to an inside of the nozzle housing (2) and to the main flow via a housing wall opening (7), so that a bypass flow can flow through the bypass,
- a sensor (8) arranged inside the bypass for measuring parameters of the conveyed air, having several individual webs (31) spaced apart from each other on which respective measuring means of the sensor (8) are arranged,
**characterized by**
- a guiding arrangement (30) arranged inside the bypass and upstream of the sensor (8) for guiding the bypass flow to the respective webs (31) of the sensor, wherein the guiding arrangement has several nozzle openings (6) which are respectively oriented towards the webs (31) of the sensor (8), so that the bypass flow through the nozzle openings (6) is directly guided to the measuring means arranged on the webs (31).

2. The nozzle device according to claim 1, **characterized in that** the sensor (8) is a mass flow sensor with measuring resistors as measuring means.

3. The nozzle device according to claim 1 or 2, **characterized in that** the guiding arrangement (30) and the webs (31) of the sensor (8) are arranged in the flow direction at a distance of 3-10 mm with respect to each other.

4. The nozzle device according to at least one of the preceding claims, **characterized in that** the webs (31) are designed with a free end and the measuring means are respectively arranged in the region of the free end of the webs (31).

5. The nozzle device according to at least one of the preceding claims, **characterized in that** the webs (31) extend parallel at a distance of 5-10 mm starting from a conductor plate and have a length of 20-80 mm.

6. The nozzle device according to at least one of the preceding claims, **characterized in that** a dust collector (4) is arranged in the bypass upstream of the sensor (8) in the flow direction.

7. The nozzle device according to claim 6, **characterized in that** the dust collector (4) has several baffle plates (10) and several guide plates (9), which are arranged in a flow direction in an alternating and spaced apart manner, wherein the guide plates (9) have at least one nozzle hole (11) and the baffle plates (10) have at least one flow passage with an enlarged flow cross section relative to the at least one nozzle hole (11), so that the bypass flow, when flowing through the at least one nozzle hole (11), respectively forms a jet flow and hits a baffle surface of the respective subsequent baffle plate (10) and bypasses the respective baffle plate (10) via the at least one flow passage.

8. The nozzle device according to claim 7, **characterized in that** the guide plate or baffle plate (10b) arranged last as seen in the flow direction forms the guiding arrangement (30).

9. The nozzle device according to at least one of the preceding claims 6 to 8, **characterized in that** the dust collector (4), designed as a fine dust baffle collector, has at least one baffle plate (10') and at least one guide plate (9'), which are arranged perpendicular to the flow direction one upon another, wherein the at least one guide plate (9') has at least one nozzle hole (11) and at least one flow passage (12) with an enlarged flow cross section relative to the at least one nozzle hole (11), so that the bypass flow, when flowing through the at least one nozzle hole (11), respectively forms a jet flow and hits a baffle surface of the subsequent baffle plate (10') that comes next in the flow direction.

10. The nozzle device according to claim 6, **characterized in that** the dust collector (4) has a housing, which forms the bypass at least in sections.

11. The nozzle device according to at least one of the preceding claims, **characterized in that** the webs (31) of the sensor (8) are arranged extending obliquely at an angle of 10-30° in relation to a plane that runs parallel to a cross-sectional surface of the nozzle openings (6) of the guiding arrangement (30).

12. The nozzle device according to any of the preceding claims 7 to 11, **characterized in that** an overall cross-section of the nozzle openings (6) is larger than that of the at least one nozzle hole (11) or of the several nozzle holes (11).

13. A method for measuring an air mass flow flowing through the nozzle device (1) according to any of the preceding claims, wherein the bypass flow is guided to the respective spaced apart webs of the sensor (8), inside the bypass, via the guiding arrangement (30) arranged upstream of the sensor (8), so that the bypass flow is directly guided to and around the measuring means arranged on the webs (31).

## Revendications

1. Dispositif de buse réalisé pour le refoulement d'air dans une soufflante, comprenant :
- un boîtier de buse (2) pour le guidage d'un écoulement principal,
- une dérivation prévue côté extérieur au niveau du boîtier de buse, qui est reliée par écoulement par le biais d'une ouverture de paroi de boîtier (7) avec un intérieur du boitier de buse (2) et l'écoulement principal, de sorte que la dérivation peut être traversée par un écoulement de dérivation,
- un capteur agencé dans la dérivation (8) pour la mesure de paramètres de l'air refoulé, qui présente plusieurs branches (31) individuelles et espacées les unes des autres, au niveau desquelles sont agencés respectivement des moyens de mesure du capteur (8),
**caractérisé par**
- un dispositif de guidage (30) agencé en amont du capteur (8) dans la dérivation pour le guidage de l'écoulement de dérivation sur les branches respectives (31) du capteur,
dans lequel le dispositif de guidage présente plusieurs ouvertures de buse (6), qui sont orientées respectivement vers les branches (31) du capteur (8) de sorte que l'écoulement de dérivation est guidé par les ouvertures de buse (6) directement sur les moyens de mesure agencés sur les branches (31).

2. Dispositif de buse selon la revendication 1, **caractérisé en ce que** le capteur (8) est un capteur de débit massique avec des résistances de mesure en tant que moyen de mesure.

3. Dispositif de buse selon la revendication 1 ou 2, **caractérisé en ce que** le dispositif de guidage (30) et les branches (31) du capteur (8) sont agencés l'un par rapport à l'autre dans la direction d'écoulement à une distance de 3 - 10 mm.

4. Dispositif de buse selon au moins une des revendications précédentes, **caractérisé en ce que** les branches (31) sont réalisées avec une extrémité libre et les moyens de mesure sont agencés respectivement dans la zone de l'extrémité libre des branches (31).

5. Dispositif de buse selon au moins une des revendications précédentes, **caractérisé en ce que** les branches (31) s'étendent parallèlement à une distance de 5 - 10 mm à partir d'une plaque de guidage et présentent une longueur de 20 - 80 mm.

6. Dispositif de buse selon au moins une des revendications précédentes, **caractérisé en ce qu'**un séparateur de poussière (4) est agencé en amont du capteur (8) dans la direction d'écoulement dans la dérivation.

7. Dispositif de buse selon la revendication 6, **caractérisé en ce que** le séparateur de poussière (4) présente plusieurs plaques déflectrices (10) et plusieurs plaques de guidage (9), qui sont agencées espacées et alternativement dans une direction d'écoulement dans lequel les plaques de guidage (9) présentent au moins un trou de buse (11) et les plaques déflectrices (10) présentent au moins un passage d'écoulement avec section transversale d'écoulement agrandie par rapport à l'au moins un trou de buse (11), de sorte que l'écoulement de dérivation forme lors de l'écoulement par l'au moins un trou de buse (11) respectivement un écoulement de jet et heurte une surface déflectrice de la plaque déflectrice (10) respectivement successive et s'écoule devant la plaque déflectrice (10) respective par le biais de l'au moins un passage d'écoulement.

8. Dispositif de buse selon la revendication 7, **caractérisé en ce que** la plaque déflectrice (10b) ou plaque de guidage agencée en dernier vu dans la direction d'écoulement forme le dispositif de guidage (30).

9. Dispositif de buse selon au moins une des revendications précédentes 6 à 8,**caractérisé en ce que** le séparateur de poussière (4) réalisé en tant que séparateur à impact de particules fines présente au moins une plaque déflectrice (10') et au moins une plaque de guidage (9'), qui sont agencées superposées perpendiculairement à la direction d'écoulement, dans lequel l'au moins une plaque de guidage (9') présente au moins un trou de buse (11) et au moins un passage d'écoulement (12) avec section d'écoulement agrandie par rapport à l'au moins un trou de buse (11), de sorte que l'écoulement de dérivation forme lors de l'écoulement par l'au moins un trou de buse (11) respectivement un écoulement de jet et heurte une surface déflectrice de la plaque déflectrice (10') successive dans la direction d'écoulement.

10. Dispositif de buse selon la revendication 6, **caractérisé en ce que** le séparateur de poussière (4) présente un boîtier, qui forme au moins par section la dérivation.

11. Dispositif de buse selon au moins une des revendications précédentes, **caractérisé en ce que** les branches (31) du capteur (8) sont agencées en oblique selon un angle de 10 - 30° par rapport à un plan, qui s'étend parallèlement à une surface de section transversale des ouvertures de buse (6) du dispositif de guidage (30).

12. Dispositif de buse selon une des revendications précédentes 7 à 11, **caractérisé en ce qu'**une section transversale totale des ouvertures de buse (6) est supérieure à celle de l'au moins un trou de buse (11) ou des plusieurs trous de buse (11).

13. Procédé de mesure d'un débit massique d'air traversant le dispositif de buse (1) selon une des revendications précédentes, dans lequel l'écoulement de dérivation est guidé sur les branches espacées respectives du capteur (8) dans la dérivation par le biais du dispositif de guidage (30) agencé en amont du capteur (8), de sorte que l'écoulement de dérivation est guidé directement sur les moyens de mesure agencés sur les branches (31) et autour de ceux-ci.
